Europäisches Patentamt

European Patent Office

Office européen des brevets

(11) Veröffentlichungsnummer: **0 390 948**
**A1**

## (12) EUROPÄISCHE PATENTANMELDUNG

(21) Anmeldenummer: 89106031.1

(51) Int. Cl.5: **A01G 27/00**

(22) Anmeldetag: **06.04.89**

(43) Veröffentlichungstag der Anmeldung:
**10.10.90 Patentblatt 90/41**

(84) Benannte Vertragsstaaten:
**AT BE DE FR NL**

(71) Anmelder: **Reuss, Rita**
**Schlesienstrasse 10**
**D-8602 Memmelsdorf(DE)**

(72) Erfinder: **Reuss, Rita**
**Schlesienstrasse 10**
**D-8602 Memmelsdorf(DE)**

(74) Vertreter: **Göbel, Matthias, Dipl.-Ing.**
**Pruppacher Hauptstrasse 5-7**
**D-8501 Pyrbaum-Pruppach(DE)**

(54) **Anordnung zum Anfeuchten von Pflanzenerde.**

(57) Bei einer Anordnung zum Anfeuchten von Pflanzenerde mit einem Aufnahmebehälter für die Pflanzenerde und einem Aufnahmebehälter für die Flüssigkeit sowie einem die Innenräume der beiden Aufnahmebehälter miteinander verbindenden Saugkörper ist zur ausreichend sicheren Zuführung von Flüssigkeit an die Pflanzenerde der Aufnahmebehälter (2) für die Pflanzenerde oberhalb des Flüssigkeitsspiegels frei in den Flüssigkeitsbehälter (1) einstellbar und trägt einen topfförmigen Saugkörper (7) aus saugfähig gebranntem Ton, der mit einer oberen Teillänge (7') in die Pflanzenerde einragt, sich auf einer auf die Bodenfläche (8) innen des Aufnahmebehälters (2) aufgelegten Lüftungs- und Entwässerungsmatte (9) abstützt und mit einer unteren, unten geschlossenen Teillänge (7") in die Flüssigkeit des Flüssigkeitsbehälters eintaucht.

EP 0 390 948 A1

Anordnung zum Anfeuchten von Pflanzenerde

Die Erfindung betrifft eine Anordnung zum Anfeuchten von Pflanzenerde mit einem Aufnahmebehälter für die Pflanzenerde und einem Aufnahmebehälter für die Flüssigkeit sowie einem die Innenräume der beiden Aufnahmebehälter miteinander verbindenden Saugkörper.

Bei einer bekannten Einrichtung dieser Art (CH-PS 308 827) sind der Aufnahmebehälter für die Pflanzenerde und der Aufnahmebehälter für die Flüssigkeit durch einen pilzförmigen Saugkörper miteinander verbunden, wobei der Schaft des Saugkörpers in die Flüssigkeit eintaucht, während der Pilzkopf in die Pflanzenerde einragt. Der Pilzkopf des Saugkörpers ergibt dabei jedoch nur eine relativ kleine Kontaktierungsfläche mit der Pflanzenerde und die geringe Querschnittsgröße des Schafts erlaubt des öfteren keine ausreichende Flüssigkeitsleitung an den Pilzkopf. Hierdurch arbeitet die Einrichtung nicht zuverlässig und nicht sicher.

Es ist Aufgabe der Erfindung, das Anfeuchten der Pflanzenerde in ausreichender Weise sicher zu ermöglichen.

Erfindungsgemäß ist diese Aufgabe dadurch gelöst, daß der Aufnahmebehälter für die Pflanzenerde oberhalb des Flüssigkeitsspiegels frei in den Flüssigkeitsbehälter einstellbar ist und einen topfförmigen Saugkörper aus saugfähig gebranntem Ton trägt, der mit einer oberen Teillänge in die Pflanzenerde einragt und sich auf einer auf die Bodenfläche innen des Aufnahmebehälters aufgelegten Lüftungs- und Entwässerungsmatte abstützt und mit einer unteren, unten geschlossenen Teillänge in die Flüssigkeit des Flüssigkeitsbehälters eintaucht. Hierbei kann die obere Teillänge des Saugkörpers einen die untere Teillänge des Saugkörpers nach außen umlaufend überragenden Kragen aufweisen, der mit einer Ringfläche auf die Lüftungs- und Entwässerungsmatte aufliegt. Auf diese Weise sind mit geringem Platzbedarf große Kontaktierungsflächen zwischen Saugkörper und Pflanzenerde geschaffen und es stehen große Querschnitte zur Verfügung, über die der Flüssigkeitstransport zwischen den beiden Aufnahmebehältern erfolgen kann.

Zweckmäßig ist der Aufnahmebehälter für die Pflanzenerde mittels am Boden desselben außen abnehmbar angesteckten Rohrstücken im Flüssigkeitsbehälter aufstellbar wobei zur Anpassung oder Änderung der Stellhöhe des Aufnahmebehälters für die Pflanzenerde die Rohrstücke axial übereinander eine Anzahl vorbereitete Sollbruchstellen aufweisen, an die zu Längenänderungen der Rohrstücke Rohrstückabschnitte abbrechbar sind. Eine besonders vorteilhafte Ausgestaltung des Saugkörpers ist dann zu erreichen, wenn die in die Pflanzenerde eintauchende Teillänge des Saugkörpers außen im wesentlichen zylindrisch gestaltet und über die in die Flüssigkeit eintauchende Teillänge außen im wesentlichen kegelstumpfförmig ausgebildet ist und daß die beiden Teillängen unabhängig voneinander beliebig gleiche oder verschiedene Höhen aufweisen. Hierdurch ist die Möglichkeit gegeben durch die Anordnung mehr oder weniger langer zylindrischer bzw. kegelstumpfförmiger Teillängen unterschiedlich große Kontaktierungsflächen für den Saugkörper zu schaffen, die, z. B. durch den Feuchtebedarf der jeweiligen Pflanzenart bestimmt sind. Eine Anpassung der Kontaktierungsflächen kann auch dadurch erreicht werden, daß die zylindrische Teillänge des Saugkörpers mindestens über eine Teilhöhe außen durch eine in der Breite unveränderbare oder veränderbare Manschet te umfaßt ist. Durch Breitenveränderung der Manschette verbleiben beliebig große Kontaktierungsflächen, die eine exakte Anpassung des Flüssigkeitsübertritts an die Pflanzenerde zulassen. Es versteht sich, daß die Manschette beliebig ausgeführt und am Saugkörper gehalten sein kann. Nach bevorzugter Ausführung ist die Manschette durch einen Bandabschnitt, beispielsweise aus Papier, Kunststoff oder Gummi gebildet, der mit der zylindrischen Teillänge des Saugkörpers durch Klebung oder Reibungsschluß verbindbar ist.

Außerdem ist noch vorgesehen, daß der Saugkörper innen mindestens über eine Teilhöhe einen als Flüssigkeitsverdränger sowie Mengenregler dienenden Kernkörper aus porösen Werkstoff, z. B. einem Kunststoff, aufnimmt. Als geeigneter Kunststoff ist ein Schaumwerkstoff bzw. ein aufgeblähter Kunststoff vorgesehen. Darüberhinaus besteht aber auch die Möglichkeit, den Saugkörper mindestens über eine Teilhöhe mit einem als Flüssigkeitsverdränger sowie Mengenregler dienenden Granulat, z. B. einem Kunststoff aufzufüllen. Durch den Kernkörper sind innenseitige Flächenabschnitte des Saugkörpers abdeckbar und so mehr oder weniger große Übertrittsflächen für Flüssigkeit in Richtung des Aufnahmebehälters für die Pflanzenerde erzielbar. Von Vorteil hat sich die Anordnung von den Flüssigkeitsfluß am Saugkörper fördernde Längsrillen oder Längskerben in der Umfangsfläche der Kernkörper erwiesen. Kernkörper mit zum Saugkörper geringeren Höhe ergeben eine Vergrösserung der Kontaktierungsflächen am Saugkörper durch gleichzeitiges Wirksamwerden von inneren und äußeren Umfangsflächen bzw. Teilstücke derselben.

Schließlich wird zur Verhinderung eines unbeabsichtigten Übertritts von Pflanzenerde in den die Flüssigkeit aufnehmenden Behälter vorgeschlagen, auf die Lüftungs- und Entwässerungsmatte oben eine poröse, dünne Abdeckung aufzulegen. Als vorteilhaft hat sich noch gezeigt, die Lüftungs- und Entwässerungsmatte durch eine gelochte Platte aus einem, z. B. nicht verrottbaren Werkstoff, insbesondere einem Kunststoff zu bilden, wobei die Platte durch Ansätze, Stege, Leisten od. dgl. am Boden des Aufnahmebehälters für die Pflanzenerde und/oder der Platte im Abstand des Bodens des Aufnahmebehälters haltbar ist.

Zur Vermeidung einer übermäßigen Befeuchtung der Pflanzenerde wird ferner vorgeschlagen, daß der Boden des Aufnahmebehälters für die Pflanzenerde Durchtrittsöffnungen für gegebenenfalls vorhandene überschüssige Flüssigkeit aufweist. Der Flüssigkeitsbehälter selbst kann außerdem ein an beiden Enden offenes Überlaufrohr aufnehmen, dessen eines Ende in einer Bodenöffnung des Flüssigkeitsbehälters ausmündet und dessen anderes Ende am Flüssigkeitsspiegel endet. Hierdurch ist sichergestellt, daß der Flüssigkeitsspiegel eine vorbestimmte Höhe nicht überschreitet und daß gegebenenfalls überschüssiges Wasser selbsttätig aus dem Flüssigkeitsbehälter über das Überlaufrohr in den Erdboden bzw. in einen übertopf od. dgl. abführbar ist. Es versteht sich, daß der Saugkörper innen bevorzugt mit einer saugfähigen Umfangsfläche ausgerüstet ist. Auch ist eine Beschichtung, z. B. ein Farbauftrag oder eine Glasurschicht an der Innenseite des Saugkörpers möglich.

Fernerhin kann bei in das Erdreich eingrabbaren Flüssigkeitsbehältern der Flüssigkeitsbehälter den die Pflanzenerde aufnehmenden Behälter oben überragen und mit nach oben und außen zurückgebogenen Stützrand auf das Erdreich aufliegen. Der zurückgebogene Stützrand verhindert einerseits den unbeabsichtigten Übertritt von Erdreich in den Flüssigkeitsbehälter und stabilisiert den Flüssigkeitsbehälter im Bereich der Randkante. Bei eingegrabenen Flüssigkeitsbehältern muß jedoch dafür gesorgt sein, daß der Flüssigkeitsbehälter eine durchlässige Unterlage aus Kies, Splitt oder Sand aufweist, damit überschüssiges Wasser, das z. B. durch Regenwasser gebildet sein kann, aus dem die Pflanzerde aufweisenden Behälter und aus dem Flüssigkeitsbehälter abfließen kann. Anordnungen dieser Art eignen sich zum Einsatz auf Gräbern, Außenanlagen, Hanggärten usw.

Als zweckmäßig hat sich letztlich noch erwiesen, zwischen dem Saugkörper und der Durchführungsöffnung für den Saugkörper im Boden des Pflanzenerdebehälters sowie der Lüftungs- und Entwässerungsmatte mindestens einen Ablaufschlitz für im Pflanzenerdebehälter überschüssige Flüssigkeiten in Richtung des Flüssigkeitsbehälter und weiter in das Überlaufrohr auszubilden. Der Ablaufschlitz kann dabei beliebig gestaltet, bevorzugt ringförmig um den Saugkörper herumgelegt sein.

Wie die Erfindung ausgeführt sein kann, zeigen die in den Fig. dargestellten Ausführungsbeispiele. Hierin bedeuten:

Fig. 1 eine Anordnung im Schnitt,

Fig. 2 eine Anordnung im Schnitt gemäß einer weiteren Ausführungsform,

Fig. 3 einen Schnitt nach der Linie III - III der Fig. 2,

Fig. 4 einen Schnitt nach der Linie IV - IV der Fig.1,

Fig. 5, 6 und 7 verschiedene Saugkörper im Schnitt,

Fig. 8 eine Anordnung im Schnitt gemäß einer abgewandelten Ausführungsform,

Fig. 9 einen Saugkörper im Schnitt, entsprechend einer weiteren Ausführungsform,

Fig.10 ein mehrteiliger Flüssigkeitsbehälter in Draufsicht,

Fig.11 nebeneinander gestellte Anordnungen im Schnitt,

Fig.12 eine Anordnung gemäß Fig. 11, in Draufsicht,

Fig.13 eine abgewandelte Anordnung in Draufsicht,

Fig.14 eine Anordnung in Draufsicht,

Fig.15 eine weitere Anordnung in Draufsicht,

Fig.16 eine Anorndung gemäß einer anderen Ausführungsform in Draufsicht und

Fig.17 eine gelochte Platte im Schnitt.

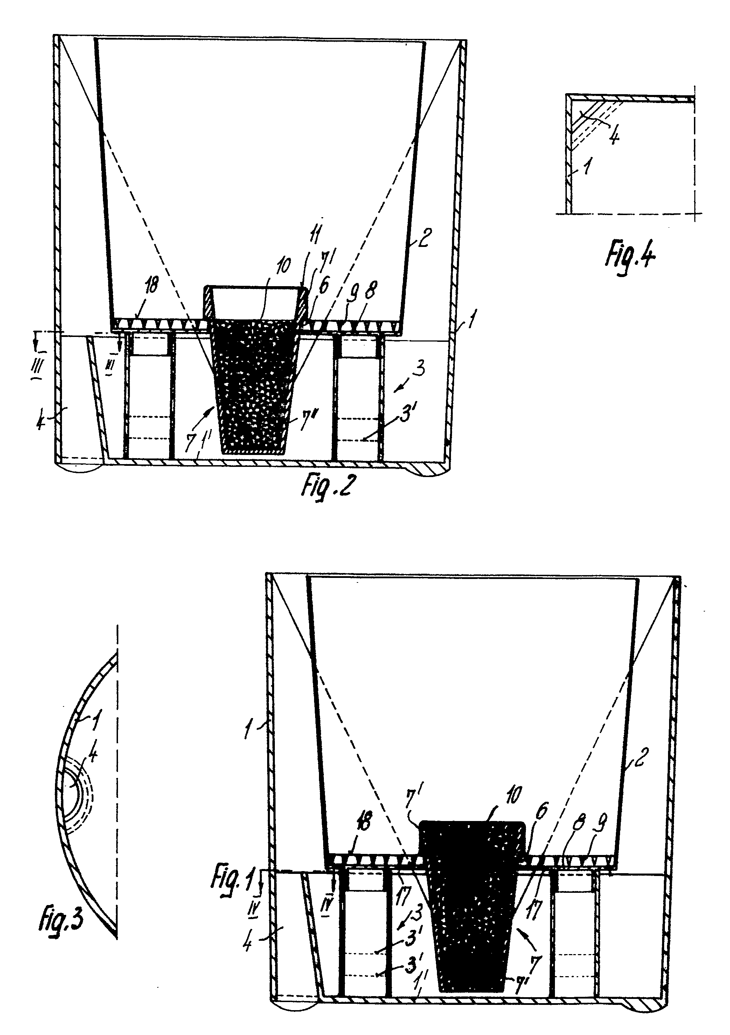

In den Fig. 1 und 2 sind mit 1 Aufnahmebehälter für eine Flüssigkeit, z. B. Wasser, bezeichnet. In die Aufnahmebehälter 1 sind Aufnahmebehälter 2 für Pflanzenerde von oben her frei einstellbar. Die Aufnahmebehälter 2 stützen sich hierbei mittels Rohrstücken 3 auf den Boden 1′ der Aufnahmebehälter 1 ab. Die Rohrstücke 3 weisen Sollbruchstellen 3′ auf, wodurch durch Abbrechen von Abschnitten Längenänderungen der Rohrstücke 3 zu Höhenänderungen für die Aufnahmebehälter 2 möglich sind. Die Aufnahmebehälter 1 sind mit einem Überlaufrohr 4 versehen, durch das der Flüssigkeitsspiegel 5 eine maximale Höhe im Aufnahmebehälter 1 nicht überschreitet. Über das Überlaufrohr 4 kann die Flüssigkeit aus dem Aufnahmebehälter 1 abfließen. Der Aufnahmebehälter 2 nimmt in einer Ausnehmung 6 des Bodens 8 einen Saugkörper 7 auf, der als Dosierelement wirkt und topfförmig gestaltet ist. Mit einer in die Pflanzenerde einragenden und im wesentlichen zylindrischen Teillänge 7′ stützt sich der Saugkörper 7 auf den Boden 8 des Aufnahmebehälters 2 ab. Auf dem Boden 8 ist eine Lüftungs- und Entwässerungsmatte 9 frei aufgelegt, die ihrerseits den Saugkörper 7 stützt. Die Matte 9 ist durch ein Vlies 18 abgedeckt. Anstelle der Matte 9 kann auch eine mit Lochungen 20 versehene Platte 19 in Anwendung kommen, die durch Stege 21 auf dem Boden 8 gestützt ist. Die Stege 21 können an der Platte 19 selbst und/oder dem Boden 8 angeformt sein. Der Saugkörper 7 ist aus gebranntem Ton hergestellt und ermöglicht so durch Kapillarwirkung Flüssigkeitsteilchen aus dem Aufnahmebehälter 1 in die Pflanzenerde des Aufnahmebehälters 2 aufsteigen zu lassen. Durch eine Teillänge 7′ mit mehr oder weniger großer Höhe ist die Kontaktierungsfläche des Saugkörpers 7 veränderbar, so daß dem Benutzer Gelegenheit gegeben ist, entsprechend der Pflanzenart mehr oder weniger große Mengen Flüssigkeit in die Pflanzenerde des Aufnahmebehälters 2 übertreten zu lassen. Zusätzliche Öffnungen 17 im Boden 8 erleichtern den Rückfluß von überschüssiger Flüssigkeit in den Aufnahmebehälter 1. Der Saugkörper 7 der Fig. 1 nimmt einen Kernkörper 10 aus einem porösen Werkstoff, z. B. einem Kunststoff auf, der als Flüssigkeitsverdränger sowie Mengenregler dient. Während sich beim Ausführungsbeispiel der Fig. 1 der Kernkörper 10 über die ganze Länge des Saugkörpers 7 erstreckt, endet der Kernkörper 10 in Fig. 2 im Abstand der oberen Randkante 11 des Saugkörpers 7, wodurch die Kontaktierungsfläche größer ist.

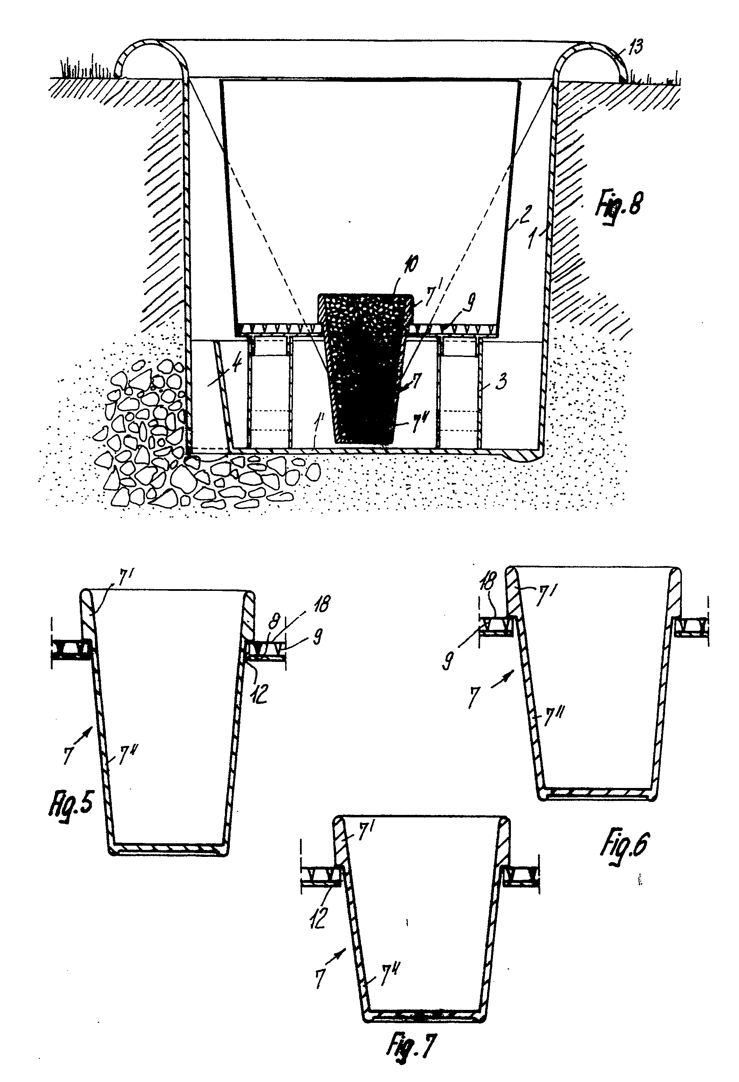

Bei der Anordnung besteht, wie in den Fig. 5 bis 7 gezeigt, die Möglichkeit, Saugkörper 7 mit verschieden langen unteren Teillängen 7″ in Anwendung zu bringen, wodurch auch mehr oder weniger große Übertrittsflächen für die Flüssigkeit an den Saugkörpern erzielbar sind. Zwischen Saugkörper 7 und Boden 8 des Aufnahmebehälters 2 sind Schlitze 12 vorgesehen, über die gegebenenfalls vorhandenes überschüssiges Wasser aus dem Aufnahmebehälter 2 in den Aufnahmebehälter 1 abfließen kann um von dort über das Überlaufrohr 4 abgeleitet zu werden.

Bei der Anordnung der Fig. 8 ist der Aufnahmebehälter 1 nach oben über den Aufnahmebehälter 2 herausgeführt und der Rand 13 desselben nach außen unten zurückgebogen. Der Rand 13 wirkt bei in Erdreich eingegrabenem Aufnahmebehältern 1 als Trennwand zur Vermeidung eines unbeabsichtigten Übertretens von Erdreich in den Aufnahmebehälter 1. Außerdem stabilisiert der Rand den Aufnahmebehälter 1. Es versteht sich, daß bei eingegrabenem Aufnahmebehälter 1 unterhalb desselben eine Kies- oder Schotterschicht vorgesehen ist, über die gegebenenfalls die vom Überlaufrohr 4 kommende überschüssige Flüssigkeit behinderungsfrei abfließen kann.

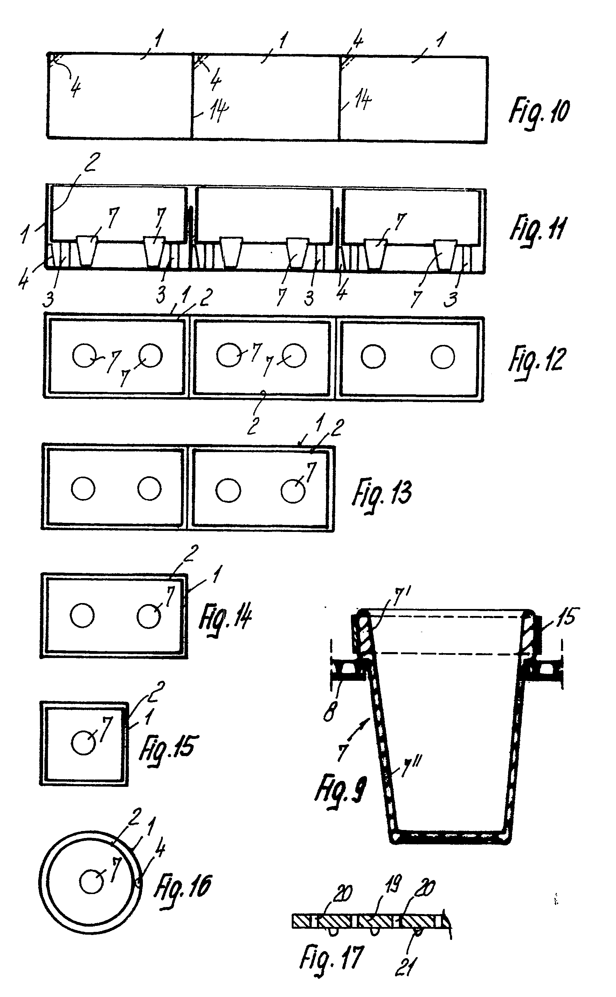

Bei der Anordnung der Fig. 10 sind mehrere Aufnahmebehälter 1 zu einer Einheit zusammengefaßt, die durch Trennwände 14 voneinander getrennt sind. In die Aufnahmebehälter sind von oben her Aufnahmebehälter 2 für Pflanzenerde (Fig. 11 und 12) eingestellt, die sich durch Rohrstücke 3 in den Flüssigkeitsbehältern 1 abstützen. Jeder Aufnahmebehälter 2 nimmt zwei Saugkörper 7 auf, die eine gleichmäßige Befeuchtung der Pflanzenerde bei längeren Aufnahmebehältern 2 erlauben. Beim Ausführungsbeispiel der Fig. 13 bilden zwei Pflanzgefäße eine Einheit, während die Ausführungsbeispiele der Fig. 14 bis 16 jeweils einen einzigen Aufnahmebehälter 1 mit einem Aufnahmebehälter 2 zeigen.

In Fig. 9 trägt der zylindrische Teil 7′ des Saugkörpers 7 außen einen Bandstreifen 15, der als Abdeckung für einen Teil des zylindrischen Teils 7′ wirkt. Vermittels des Bandstreifens 15 ist wahlweise eine Veränderung der Kontaktierungsfläche des Teils 7′ möglich. Es versteht sich, daß durch mehr oder weniger breite Bandstreifen 15, die als Manschette gestaltet sind, die Kontaktierungsfläche des Saugkörpers 7 dem zu erwartenden Feuchtegehalt der Pflanzenerde angepaßt werden kann. Der Bandstreifen 15 kann durch Klebung oder Reibung am Saugkörper 7 gehalten sein.

Insgesamt sind Änderungen der Größen der Kontaktierungsflächen durch verschieden große und/oder geformte topfförmige Saugkörper 7, verschieden hohe Saugkörperabschnitte 7′ und 7″, durch die Anordnung von Bandstreifen 15 an den Saugkörperabschnitten 7′ sowie unterschiedlich hohe Kernkörper 10 als Flüssigkeitsverdränger erzielbar.

## Ansprüche

1. Anordnung zum Anfeuchten von Pflanzenerde mit einem Aufnahmebehälter für die Pflanzenerde und einem Aufnahmebehälter für die Flüssigkeit sowie einem die Innenräume der beiden Aufnahmebehälter miteinander verbindenden Saugkörper, dadurch gekennzeichnet, daß der Aufnahmebehälter (2) für die Pflanzenerde oberhalb des Flüssigkeitsspiegels frei in den Flüssigkeitsbehälter (1) einstellbar ist und einen topfförmigen Saugkörper (7) aus saugfähig gebranntem Ton trägt, der mit einer oberen Teillänge (7′) in die Pflanzenerde einragt und sich auf einer auf die Bodenfläche (8) innen des Aufnahmebehälters (2) aufgelegten Lüftungs- und Entwässerungsmatte (9) abstützt und mit einer unteren, unten geschlossenen Teillänge (7″) in die Flüssigkeit des Flüssigkeitsbehälters eintaucht.

2. Anordnung nach Anspruch 1, dadurch gekennzeichnet, daß die obere Teillänge (7′) des Saugkörpers (7) die untere Teillänge (7″) des Saugkörpers (7) außen umlaufend überragt und mit einer Ringfläche auf die Lüftungs- und Entwässerungsmatte (9) aufliegt.

3. Anordnung nach Anspruch 1, dadurch gekennzeichnet, daß der Aufnahmebehälter (2) für die Pflanzenerde mittels am Boden desselben außen abnehmbar angesteckten Rohrstücken (3) im Flüssigkeitsbehälter (1) aufstellbar ist.

4. Anordnung nach Anspruch 3, dadurch gekennzeichnet, daß die Rohrstücke (3) axial im Abstand übereinander eine Anzahl vorbereitete Sollbruchstellen (3') aufweisen und daß zu Längenänderungen der Rohrstücke (3) Rohrstückabschnitte an den Sollbruchstellen (3') abbrechbar sind.

5. Anordnung nach Anspruch 1, dadurch gekennzeichnet, daß der Saugkörper (7) über die in die Pflanzenerde eintauchende Teillänge (7') außen zylindrisch gestaltet und über die in die Flüssigkeit eintauchende Teillänge (7") außen kegelstumpfförmig ausgebildet ist und daß die Teillängen (7', 7") unabhängig voneinander gleiche oder verschiedene Höhen aufweisen.

6. Anordnung nach Anspruch 1 und 5, dadurch gekennzeichnet, daß die zylindrische Teillänge (7') des Saugkörpers (7) mindestens über eine Teilhöhe außen durch eine in der Breite unveränderbare oder veränderbare Manschette (15) umfaßt ist.

7. Anordnung nach Anspruch 6, dadurch gekennzeichnet, daß die Manschette (15) durch einen Bandstreifen gebildet ist, der mit der zylindrischen Teillänge (7') durch Klebung oder Reibungsschluß verbunden ist.

8. Anordnung nach Anspruch 1, dadurch gekennzeichnet, daß der Saugkörper (7) innen mindestens über eine Teilhöhe einen als Flüssigkeitsverdränger sowie Mengenregler dienenden Kernkörper (10) aus einem porösen Werkstoff, z. B. einem Kunststoff, aufnimmt.

9. Anordnung nach Anspruch 1, dadurch gekennzeichnet, daß der Saugkörper (7) mindestens über eine Teilhöhe mit einem als Flüssigkeitsverdränger sowie Mengenregler dienenden Granulat aus einem Kunststoff, aufgefüllt ist.

10. Anordnung nach Anspruch 8, dadurch gekennzeichnet, daß der Kernkörper (10) in der Umfangsfläche eine Anzahl, den Flüssigkeitsfluß fördernde Längsrillen oder Längskerben aufweist.

11. Anordnung nach Anspruch 1, dadurch gekennzeichnet, daß die Lüftungs- und Entwässerungsmatte (9) oben durch eine poröse dünne Abdeckung übergriffen ist.

12. Anordnung nach Anspruch 1, dadurch gekennzeichnet, daß als Lüftungs- und Entwässerungsmatte eine gelochte Platte (19) aus einem nicht verrottbaren Werkstoff, z. B. einem Kunststoff, dient und daß die Platte (19) durch Ansätze, Stege (21) oder Leisten an der Bodeninnenseite des Aufnahmebehälters (2) für die Pflanzenerde und/oder der Platte (19) im Abstand der Innenseite des Bodens (8) gehalten ist.

13. Anordnung nach Anspruch 1, dadurch gekennzeichnet, daß der Flüssigkeitsbehälter (1) ein an beiden Enden offenes Überlaufrohr (4) aufnimmt, dessen eines Ende in einer Bodenöffnung des Flüssigkeitsbehälters (1) ausmündet und dessen anderes Ende am Flüssigkeitsspiegel endet.

14. Anordnung nach Anspruch 1, dadurch gekennzeichnet, daß der Boden (8) des Aufnahmebehälters (2) für Pflanzenerde Durchtrittsöffnungen (17) für überschüssige Flüssigkeit aufweist.

15. Anordnung nach Anspruch 1, 4 und 5 dadurch gekennzeichnet, daß der Saugkörper (7) innen eine Beschichtung, z. B. einen Farbauftrag oder eine Glasurschicht trägt.

16. Anordnung nach Anspruch 1, dadurch gekennzeichnet, daß bei im Erdreich eingrabbaren Flüssigkeitsbehältern (1) diese den Pflanzenerdebehälter (2) oben überragen und mit nach oben und außen zurückgebogenem Stützrand (13) auf das Erdreich aufliegen.

17. Anordnung nach Anspruch 1, 11 und 12, dadurch gekennzeichnet, daß zwischen dem Saugkörper (7) und der Durchführungsöffnung (6) für den Saugkörper (7) im Boden (8) des Pflanzenerdebehälters (2) sowie der Lüftungs- und Entwässerungsmatte (9) mindestens ein Ablaufschlitz (12) für im Pflanzenerdebehälter (2) überschüssige Flüssigkeiten in Richtung Flüssigkeitsbehälter (1) und weiter in das Überlaufrohr (4) ausgebildet ist.

18. Anordnung nach Anspruch 17, dadurch gekennzeichnet, daß der Ablaufschlitz (12) ringförmig um den Saugkörper (7) herum geführt ist.

Fig.4

Fig.2

Fig.3

Fig.1

Fig.8

Fig.5

Fig.6

Fig.7

*Fig. 10*

*Fig. 11*

*Fig. 12*

*Fig. 13*

*Fig. 14*

*Fig. 15*

*Fig. 16*

*Fig. 9*

*Fig. 17*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-290755 (REUSS)<br>* Spalte 3, Zeile 54 - Spalte 4, Zeile 58 *<br>* Spalte 5, Zeilen 34 - 40; Figuren 1-5 *<br>--- | 1, 3, 4, 8, 11, 12 | A01G27/00 |
| A | FR-A-1357079 (PROUTEAU)<br>* das ganze Dokument *<br>--- | 1 | |
| A | DE-A-3440616 (BLATTERT)<br>* Seite 11, letzter Absatz - Seite 15, letzter Absatz; Figuren 1-6 *<br>--- | 1 | |
| A | AU-B-538711 (DAVID ROSS WIG)<br>* Seite 6, Zeile 1 - Seite 7, Zeile 12; Figur 1 *<br>--- | 1, 9 | |
| A | CH-A-466630 (ALTORFER)<br>* das ganze Dokument *<br>----- | 1 | |

|  | RECHERCHIERTE SACHGEBIETE (Int. Cl.5 ) |
|---|---|
|  | A01G |

Der vorliegende Recherchenbericht wurde für alle Patentansprüche erstellt

| Recherchenort | Abschlußdatum der Recherche | Prüfer |
|---|---|---|
| DEN HAAG | 12 DECEMBER 1989 | HERYGERS J.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...............................................................

& : Mitglied der gleichen Patentfamilie, übereinstimmendes Dokument